# FASCICULE DE BREVET EUROPEEN

(11) **EP 1 026 388 B1**
(45) Date de publication et mention de la délivrance du brevet: **29.09.2004**
(21) Numéro de dépôt: 00400284.6
(22) Date de dépôt: 03.02.2000
(51) Int. Cl.: F02K 1/60

(54) **Arrière corps d'éjection à inversion de poussée de turboréacteur**
Heckejektorteil mit Schubumkehrvorrichtung für ein Strahltriebwerk
Rear ejection block with thrust reverser for a jet engine

(30) Priorité: 04.02.1999 FR 9901255
(43) Date de publication de la demande: 09.08.2000
(73) Titulaire: Snecma Moteurs, 75015 Paris (FR)
(72) Inventeur: Ah-Fa, Michel David, 75015 Paris (FR); Guyonnet, Xavier Jean-Michel André, 31300 Toulouse (FR); Jourdain, Gérard Ernest André, 91250 Saintry (FR)

(56) Documents cités:
- FR-A- 2 602 274
- US-A- 3 734 411
- US-A- 4 052 007
- US-A- 4 392 615
- US-A- 4 641 782
- US-A- 5 050 803

## Description

L'invention concerne un arrière corps d'éjection à inversion de poussée d'un turboréacteur du type double corps, double flux à cycle variable, destiné à assurer la propulsion d'un avion civil supersonique.

Elle concerne plus précisément un ensemble d'éjection d'un jet gazeux pour une installation de propulsion par réaction d'un avion supersonique, ledit ensemble comportant :
une tuyère primaire multivolets à section variable, située en aval d'un conduit primaire, et de laquelle s'échappe, en fonctionnement, un flux gazeux primaire,
une tuyère secondaire multivolets à section variable, située en aval d'un conduit secondaire entourant le conduit primaire, et de laquelle s'échappe, en fonctionnement, un flux gazeux secondaire, ladite tuyère secondaire se prolongeant vers l'arrière au-delà de l'orifice de sortie de la tuyère primaire,
un carénage entourant la tuyère secondaire et présentant, en aval de l'orifice de sortie de la tuyère secondaire, un col, dit col de reprise suivi d'une partie divergente,
un dispositif d'inversion de poussée comprenant deux paupières identiques montées pivotantes sur le carénage, de part et d'autre d'un plan de symétrie axial, et occupant, soit une position active ou d'inversion de poussée dans laquelle elles font saillie, transversalement dans le jet gazeux en aval du carénage, pour dévier ce jet vers l'avant, soit une position inactive ou de jet direct, dans laquelle elles sont dans le prolongement du carénage,
des moyens de commande des volets de la tuyère primaire et de la tuyère secondaire, et
des moyens de commande des paupières.

Un tel ensemble d'éjection utilise des paupières d'inversion de poussée suivant un principe connu et appliqué sur l'ensemble équipant l'avion de transport civil connu sous le nom de Concorde. Les paupières sont montées chacune de manière à pouvoir pivoter autour d'un axe transversal voisin du plan de symétrie, de manière à pouvoir régler la section de sortie des gaz d'échappement du moteur en fonction des phases de vol. La fente qui sépare l'extrémité amont des paupières de l'extrémité aval du carénage, a une largeur qui est fonction de l'angle de pivotement des paupières, et qui varie en fonction des phases de vol. Un débit d'air tertiaire, issu de l'extrémité du carénage pénètre par cette fente et vient se mélanger au flux gazeux.

On connaît également par US-A-4 052 007une tuyère d'éjection bidimensionnelle controlant l'éjection d'un flux unique comportant deux volets primaires translatables axialement et deux volets arrières pivotables en rotation.

US-A-3 734 411 décrit un inverseur comportant deux obstacles reliés à des volets ouvrant à l'extérieur pour former des aérofreins, commandés par un vérin unique et un ensemble de biellettes.

Le but de l'invention est de proposer une nouvelle cinématique pour ces paupières qui permette d'optimiser le fonctionnement en croisière supersonique et pour certaines autres phases du vol.

L'invention atteint son but par le fait que les deux paupières sont chacune montées sur le carénage par l'intermédiaire de deux biellettes latérales pouvant pivoter librement par rapport au carénage autour d'un axe géométrique transversal situé au voisinage du plan axial de symétrie, et sont chacune retenues par au moins un vérin extérieur ancré sur le carénage et prenant appui en un point de la paupière correspondante, éloigné dudit plan axial de symétrie, et par au moins un vérin intérieur ancré sur le carénage et agissant en un point de la paupière correspondante, rapproché dudit plan axial de symétrie, et par le fait que les moyens de commande des deux paupières sont constitués par lesdits vérins extérieurs et lesdits vérins intérieurs. Avantageusement, l'actionnement des vérins intérieurs permet d'obtenir les configurations exigées durant le fonctionnement en jet direct, et l'actionnement des vérins extérieurs permet d'obtenir la configuration d'inversion de poussée.

Durant le fonctionnement en jet continu, les vérins extérieurs ont une longueur sensiblement fixe, et jouent le rôle de biellettes supplémentaires, les paupières ayant alors un degré de liberté.

De préférence, chaque paupière est retenue par deux vérins intérieurs synchronisés et par deux vérins extérieurs synchronisés, disposés de part et d'autre du plan axial de symétrie de cette paupière. Le carénage est globalement de révolution autour de l'axe géométrique du conduit primaire.

Selon une autre caractéristique de l'invention, la tuyère primaire comporte une pluralité de volets chauds commandés alternant avec une pluralité de volets chauds suiveurs et la tuyère secondaire comporte une pluralité de volets froids commandés alternant avec une pluralité de volets froids suiveurs.

Les moyens de commande des volets chauds et des volets froids comportent un anneau de commande unique, mobile axialement et disposé autour des volets froids, une pluralité de leviers articulés dans leur zone médiane sur les volets froids commandés et dont une première extrémité est articulée sur l'anneau de commande, et une pluralité de biellettes reliant les volets chauds commandés aux deuxièmes extrémités des leviers.

D'autres caractéristiques et avantages de l'invention ressortiront à la lecture de la description suivante faite à titre d'exemple et en référence aux dessins annexés dans lesquels :
la figure 1 représente, en coupe, un turboréacteur sur lequel l'invention est applicable ;
les figures 2 à 6 montrent les positions angulaires des différents volets dans différentes configurations de vol;
la figure 7 montre la loi de variation de la section de la tuyère secondaire en fonction de la section de la tuyère primaire;
la figure 8 montre en détail le système de commande des volets des tuyères primaire et secondaire;

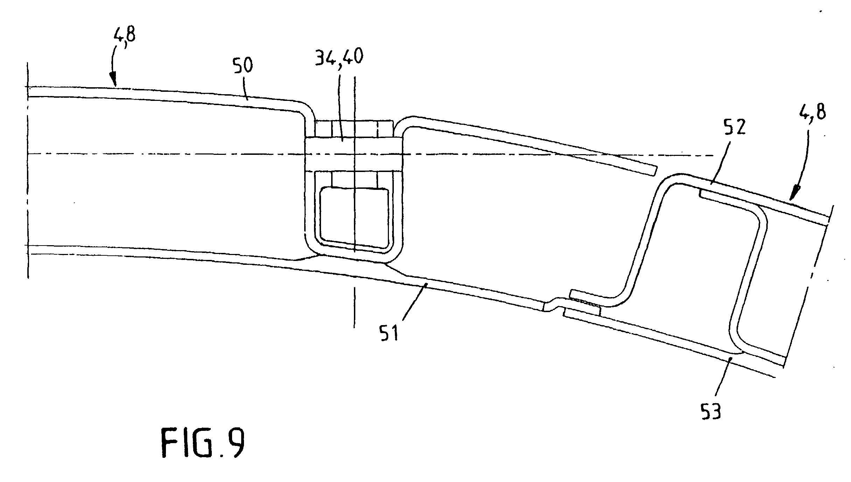

la figure 9 représente la structure de volets commandés et des volets suiveurs ;
la figure 10 est une demi-vue latérale de la tuyère tertiaire, qui montre schématiquement la cinématique des paupières, ces dernières étant dans une configuration de vol supersonique;
la figure 11 montre la position angulaire des paupières au décollage ;
la figure 12 montre la configuration des paupières en régime subsonique ; et
la figure 13 montre les paupières dans la configuration "inversion de poussée".

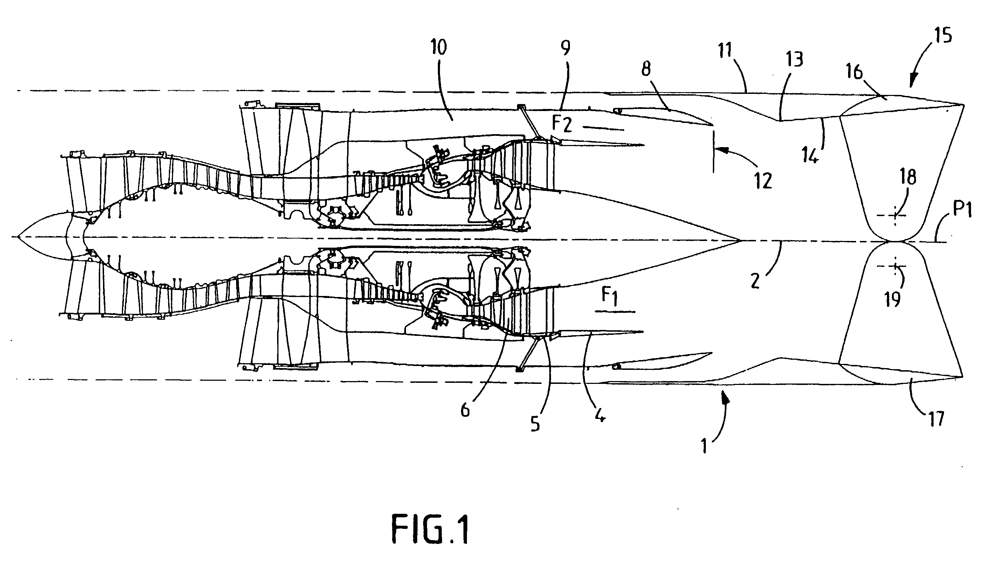

La figure 1 montre un turboréacteur sur lequel l'invention est applicable. L'arrière-corps 1 de ce turboréacteur d'axe 2 comporte une tuyère primaire ayant des volets chauds 4 articulés à l'extrémité aval d'un conduit primaire 5 dans lequel circule un flux F1 de gaz chauds issus des turbines 6, une tuyère secondaire ayant des volets froids 8 articulés à l'extrémité aval d'un conduit secondaire 9 entourant le conduit primaire 5 et délimitant avec ce dernier un passage annulaire 10 pour un flux d'air frais F2, et un carénage 11 entourant la tuyère secondaire et présentant, en aval de l'orifice de sortie 12 de la tuyère secondaire, un col 13, dit col de reprise, suivi d'une partie divergente 14. Immédiatement en aval du carénage 11 est prévue une tuyère tertiaire 15, constituée de deux paupières 16 et 17 disposées de part et d'autre d'un plan de symétrie axial P1 passant par l'axe 2 et perpendiculaire à la figure 1, et qui sont susceptibles de pivoter respectivement autour d'axes géométriques transversaux fixes 18, 19 parallèles au plan P1.

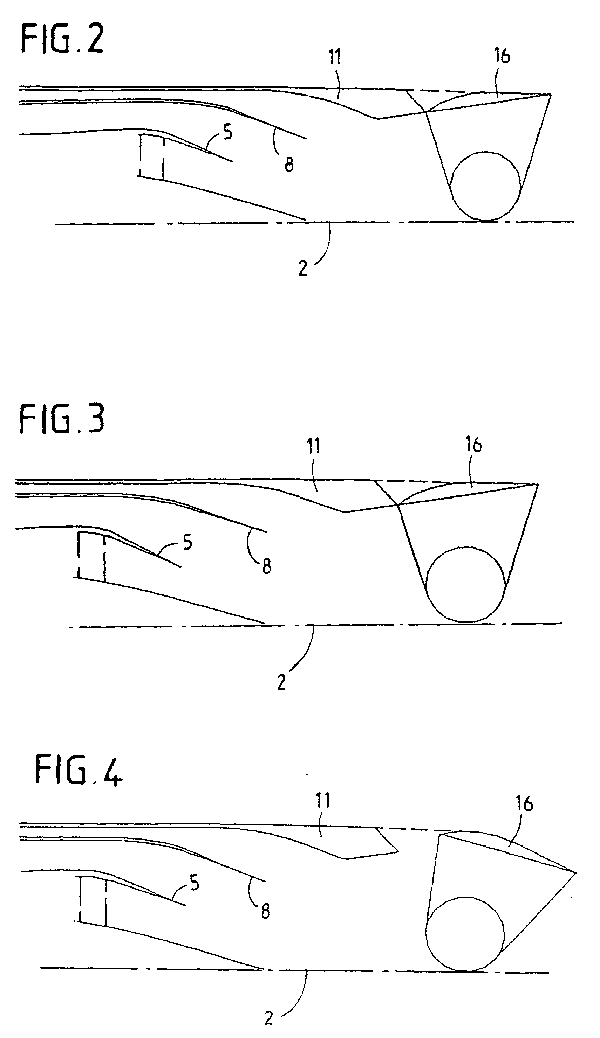

Les figures 2 à 6 montrent les positions angulaires des volets chauds 4, des volets froids 8 et des paupières 16, 17, en fonction de différentes conditions de vol:
- la figure 2 montre la configuration en régime de croisière supersonique à la vitesse M=2 ;
- la figure 3 montre la configuration des différents volets en régime transsonique M=1,2;
- la figure 4 montre la configuration en régime de croisière subsonique M=0,95 ;

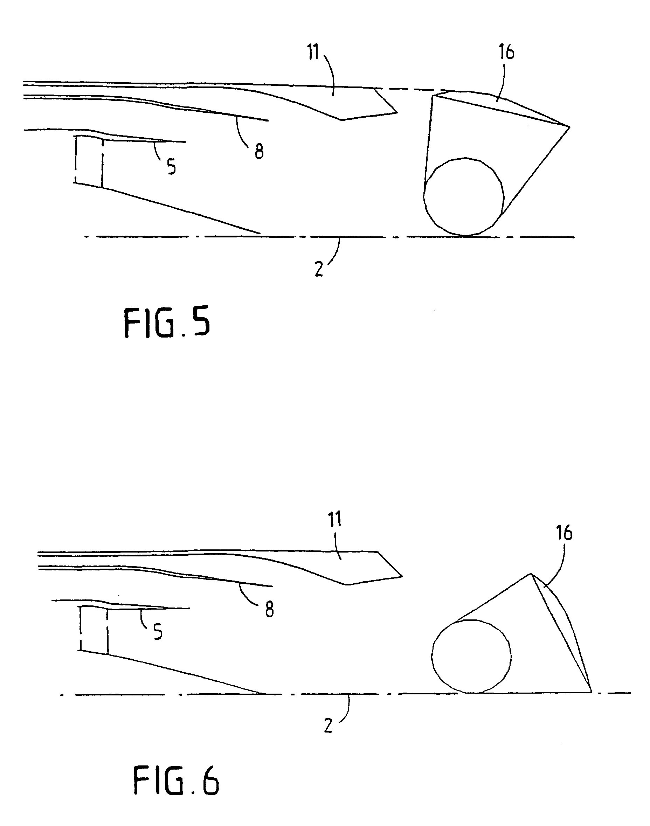

- la figure 5 montre la configuration en régime de décollage M=0,3 ; et
- la figure 6 montre la position des paupières lors de l'atterrissage, ces paupières faisant alors saillie dans le jet des gaz et inversant la poussée des gaz brûlés qui sont dirigés vers l'avant du turboréacteur.

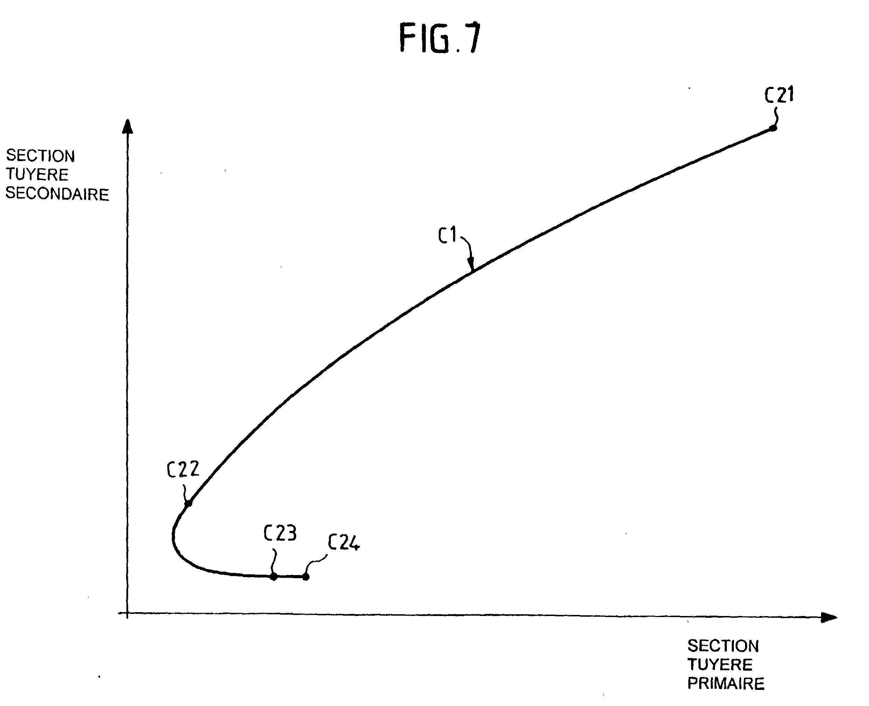

Sur la figure 7, on a représenté par la courbe C1 la loi de variation de la section de la tuyère secondaire en fonction de la section de la tuyère primaire, les points de la courbe c1 référencés C21, C22, C23, C24 correspondant respectivement aux configurations de décollage, régime transsonique M=1,2, régime de croisière supersonique M=2, et régime de croisière subsonique M=0,95.

Les volets chauds 4 de la tuyère primaire et les volets froids 8 de la tuyère secondaire comportent, de manière connue, une pluralité de volets commandés intercalés entre une pluralité de volets suiveurs. Les volets chauds commandés 4 et les volets froids commandés 6 sont actionnés ensemble au moyen d'un système unique 30 qui assure la loi de variation C1 de la section de la tuyère primaire en fonction de la section de la tuyère secondaire.

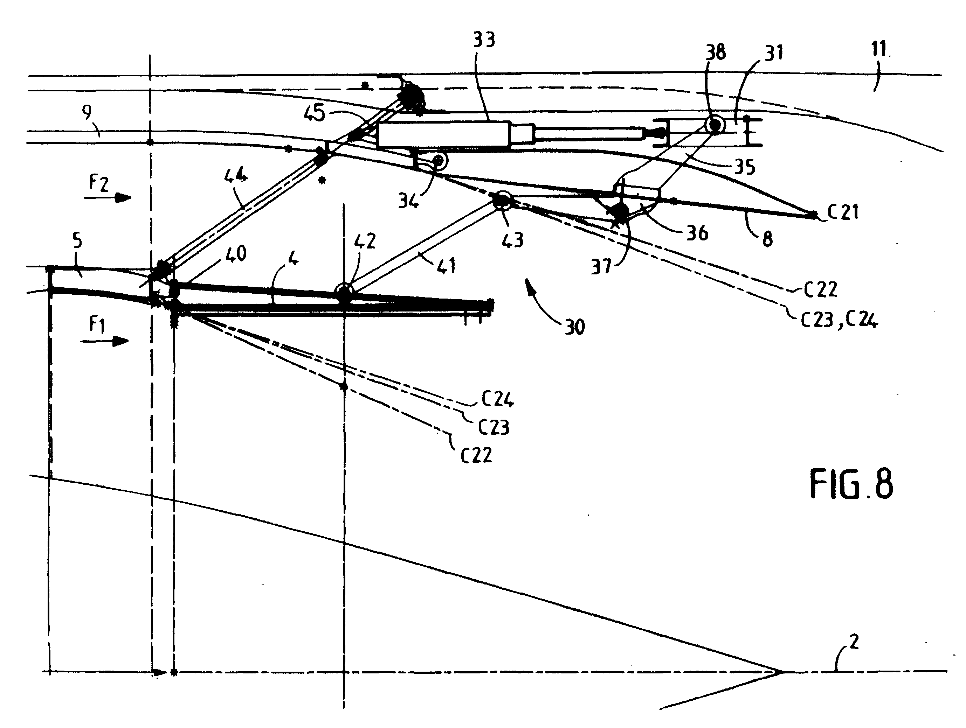

Ce système 30, montré sur la figure 8, comporte un anneau de commande 31 d'axe 2, situé entre les volets froids 8 et le carénage 11, et susceptible d'être déplacé parallèlement à l'axe 2 par des vérins télescopiques synchronisés 33 ancrés sur le conduit secondaire 9. Chaque volet froid commandé 8, articulé sur le conduit secondaire 9, de manière à pouvoir pivoter autour de l'axe 34, est relié à l'anneau de commande 31 par la branche 35 externe d'un levier 36, dont la partie médiane est articulée sur le volet froid 8, de manière à pouvoir pivoter autour d'un axe 37, parallèle à l'axe d'articulation 34. L'extrémité de la branche 35 est articulée sur l'anneau de commande 31 par l'intermédiaire d'un axe 38 parallèle à l'axe d'articulation 34.

Chaque volet chaud commandé 4 est articulé sur le conduit primaire 5, de manière à pouvoir pivoter autour d'un axe 40, parallèle à l'axe d'articulation 34 du volet froid commandé 8 correspondant sur le conduit secondaire 9. Au moins une biellette 41, dont une extrémité est articulée en 42 sur le volet chaud 4, et dont l'autre extrémité est articulée en 43 sur l'extrémité intérieure du levier 36, permet d'asservir la position angulaire de chaque volet chaud 4 en fonction de la position angulaire du volet froid correspondant 8. Les dimensions, positions et formes des leviers 36 et des biellettes 41 sont étudiées de manière à respecter la loi de variation C1 des sections des tuyères primaire et secondaire, définie à la figure 7.

Sur le plan fonctionnel, les vérins télescopiques 33 provoquent la translation de l'anneau de commande 31 parallèlement à l'axe 2 du turboréacteur. Ce déplacement provoque le pivotement des volets froids commandés 8 et des volets froids suiveurs, autour des axes d'articulation 34 par la rotation des branches externes 35 des leviers 36. Ce même déplacement de l'anneau de commande 31 et le pivotement des leviers 36 autour des axes d'articulation 37, entraînent le mouvement synchronisé des biellettes 41 et, par suite, la rotation des volets chauds commandés 4 et des volets chauds suiveurs autour des axes d'articulation 40.

Les références C21, C22, C23, C24 de la figure 8 correspondent aux positions angulaires des volets chauds 4 et des volets froids 8 aux configurations de décollage, régime transsonique M=1,2, régime de croisière supersonique M=2 et régime subsonique M=0,95. On notera que en passant de C22 à C23 sur la figure 7, à la position intermédiaire, les points d'articulation 42, 43 et 37 sont alignés et, comme le montre la figue 8, les volets 8 continuent le mouvement de fermeture tandis que les volets 4 prennent une position plus ouverte.

Des biellettes de liaison 44 relient l'extrémité aval du conduit primaire 5 à l'extrémité aval du conduit secondaire 9. L'extrémité aval du conduit secondaire 9 est, en outre, reliée au carénage 11 par des biellettes de liaison 45. Les biellettes de liaison 44 et 45 assurent la rigidification des structures de support des articulations 40 et 34 des volets chauds 4 et des volets froids 9.

Chaque volet commandé, 4 ou 8, comporte une partie structurale 50 qui supporte les axes d'articulation, 40 ou 34, et des semelles 51. Ces dernières doivent résister aux efforts dus à la pression interne dans la tuyère. Les volets suiveurs 4s ou 8s comportent de semelles 52, 53 qui assurent une étanchéité dans les deux sens. Les volets suiveurs 8s, qui font partie de la tuyère secondaire, ne subissent pas d'inversion d'écart de pression, ils peuvent être ainsi constitués d'une seule semelle 53.

La cinématique et le système de commande commun aux tuyères primaire et secondaire permettent des gains de masse d'encombrement et génèrent un niveau de pertes de charge plus réduit.

Le carénage 11 est globalement de révolution autour de l'axe de révolution 2 du conduit primaire 5.

Les paupières 17, 18, qui constituent la tuyère tertiaire 15 disposée immédiatement en aval du carénage 11, et qui constituent l'inversion de poussée lors de la phase d'atterrissage, sont montées sur le carénage 11, de telle manière qu'elles puissent tourner autour de deux axes de rotation distincts. L'un de ces axes permet de placer les deux paupières 16 et 17 en bonne position pour les configurations exigées durant le fonctionnement en jet direct. L'autre axe commande la manoeuvre des deux paupières 16 et 17 durant la configuration "inversion de poussée".

A cet effet, chacune des paupières 16 et 17 est fixée sur une structure du carénage 11 au moyen de deux biellettes latérales 60. Les biellettes 60 sont montées sur le carénage 11, de manière à ce qu'elles puissent pivoter librement autour d'un axe géométrique transversal 61 parallèle au plan P1, et sont reliées à un bord interne des paupières 16 et 17 de manière pivotante autour d'un axe 62 parallèle à l'axe transversal 61. D'autre part, chacune des paupières 16 et 17 est retenue sur le carénage 11 par deux vérins télescopiques intérieurs 63 et par deux vérins télescopiques extérieurs 64, ces vérins étant disposés de part et d'autre du plan de symétrie de chaque paupière 16, 17. Les vérins intérieurs 63 prennent appui sur le carénage 11 au point référencé 65 et l'extrémité de leur tige est articulée sur la paupière correspondante au point 66. Les vérins extérieurs 64 prennent appui sur le carénage 11 au point référencé 67 et l'extrémité de leur tige est articulée sur la paupière correspondante au point référencé 68. L'axe d'articulation défini par les points d'articulation 66 est plus proche du plan P1 que l'axe d'articulation 62, tandis que l'axe d'articulation défini par les points d'articulation 68 est plus éloigné du plan P1 que l'axe d'articulation 62 des biellettes 60 sur la paupière correspondante.

Lorsque le système d'éjection est en fonctionnement, chaque jeu de vérin 63, 64, entre alternativement en action suivant le mouvement à appliquer aux paupières 16, 17.

Durant le fonctionnement en jet direct, les vérins extérieurs 64 conservent leur longueur et n'ont ainsi qu'une fonction de biellette de longueur variable. Ainsi, l'association des pseudo-biellettes 64 et des biellettes 60 par rapport à la structure du carénage 11 compose un système à un degré de liberté: le polygone défini par les axes 67, 68, 62 et 61 est déformable, et sa déformation fixe les déplacements des paupières 16, 17. Ce déplacement est assuré par les vérins télescopiques intérieurs 63.

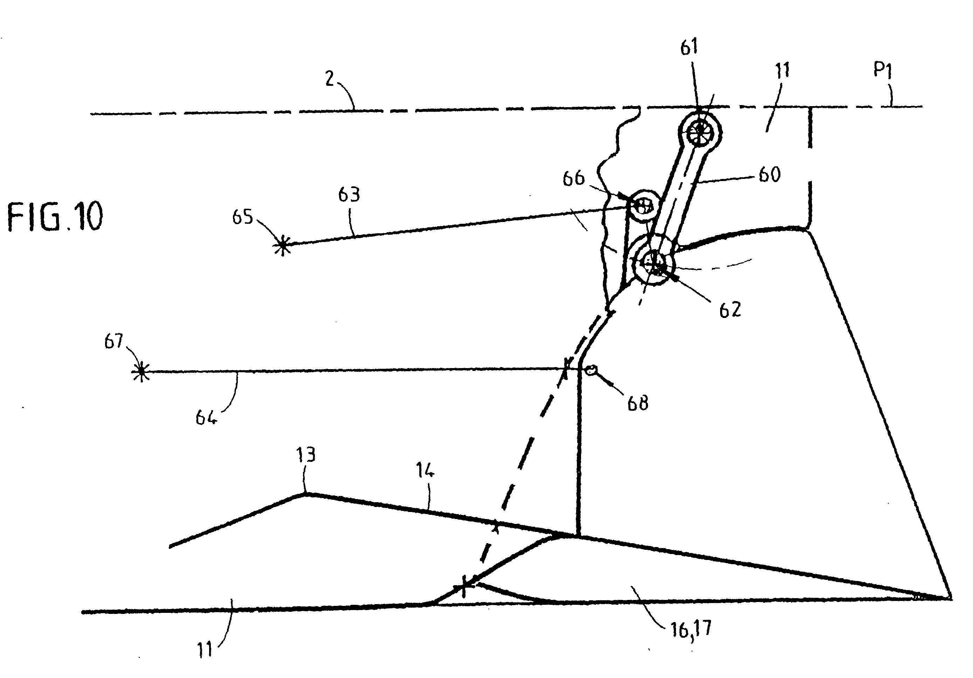

Les figures 10 à 12 montrent les positions angulaires des paupières 16, 17, respectivement au régime supersonique à M=2, au décollage, et au régime subsonique à M=0,95.

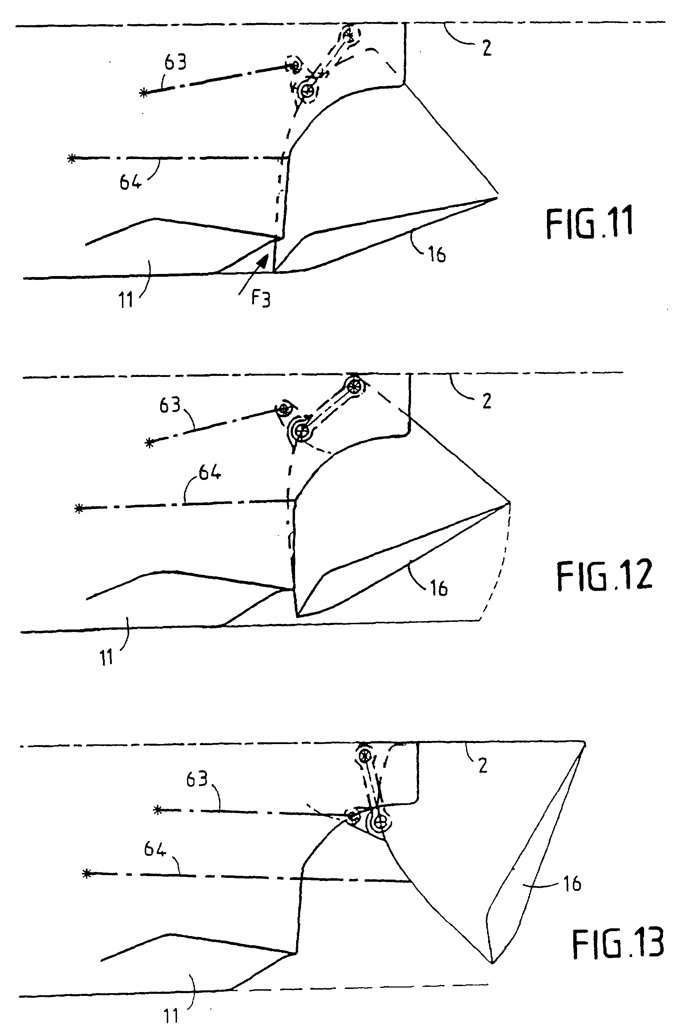

Lorsqu'on se trouve en phase d'inversion de poussée, les vérins intérieurs 63 sont maintenus à longueur fixe, ce qui limite les possibilités de rotation des biellettes 60. Le pivotement des paupières 16, 17, vers la position d'inversion de poussée, montrée sur la figure 13, est assurée par les vérins extérieurs 64. Ce déplacement des paupières 16, 17 est très proche de celui réalisé avec le système à pivot fixe du Concorde.

En revanche, en fonctionnement en jet direct, l'admission de l'air extérieur F3, dit air tertiaire durant les phases de fonctionnement à vitesse subsonique, qui, dans l'avion Concorde, est une fonction de l'angle de rotation des paupières, qui est lui-même dépendant de la section de sortie des gaz qui est requise, peut être réglée avec le système à double commande proposé par l'invention, indépendamment de la section d'éjection des gaz par l'action simultanée des vérins extérieurs 64 et des vérins intérieurs 63.

En outre, des configurations particulières peuvent être obtenues en fonction des adaptations recherchées pour des applications particulières en actionnant à la fois les vérins intérieurs 63 et les vérins extérieurs 64 pour un fonctionnement en jet direct et/ou pour un fonctionnement en inversion de poussée.

On relève également que l'invention procure un avantage supplémentaire du fait de la double commande des paupières 16 et 17. En effet, en cas de panne d'une commande bloquant la paupière dans une position indésirée, la deuxième commande permet une modification de configuration de façon à minimiser les effets néfastes de la panne.

## Revendications

1. Ensemble d'éjection d'un jet gazeux pour une installation de propulsion par réaction d'un avion supersonique, ledit ensemble comportant :
une tuyère primaire multivolets à section variable, située en aval d'un conduit primaire (5), et de laquelle s'échappe, en fonctionnement, un flux gazeux primaire (F1),
une tuyère secondaire multivolets à section variable, située en aval d'un conduit secondaire (9) entourant le conduit primaire, et de laquelle s'échappe, en fonctionnement, un flux gazeux secondaire (F2), ladite tuyère secondaire se prolongeant vers l'arrière au-delà de l'orifice de sortie de la tuyère primaire,
un carénage (11) entourant la tuyère secondaire (9) et présentant, en aval de l'orifice de sortie (12) de la tuyère secondaire, un col de reprise (13) suivi d'une partie divergente (14),
un dispositif d'inversion de poussée (15) comprenant deux paupières (16, 17) identiques montées pivotantes sur le carénage (11), de part et d'autre d'un plan de symétrie axial (P1) et occupant, soit une position active ou d'inversion de poussée dans laquelle elles font saillie, transversalement dans le jet gazeux en aval du carénage (11), pour dévier ce jet vers l'avant, soit une position inactive ou de jet direct, dans laquelle elles sont dans le prolongement du carénage (11),
des moyens de commande des volets de la tuyère primaire et de la tuyère secondaire, et
des moyens de commande des paupières,
**caractérisé par le fait que**
les deux paupières (16, 17) sont chacune montées sur le carénage par l'intermédiaire de deux biellettes latérales (60) pouvant pivoter librement par rapport au carénage autour d'un axe géométrique transversal (61) situé au voisinage du plan axial de symétrie (P1), et sont chacune retenues par au moins un vérin extérieur (64) ancré sur le carénage (11) et prenant appui en un point (68) de la paupière correspondante, éloigné dudit plan axial de symétrie (P1), et par au moins un vérin intérieur (63) ancré sur le carénage (11) et agissant en
un point (66) de la paupière correspondante, rapproché dudit plan axial de symétrie P1), et
**par le fait que** les moyens de commande des deux paupières (16, 17) sont constitués par lesdits vérins extérieurs (64) et lesdits vérins intérieurs (63).

2. Ensemble d'éjection selon la revendication 1, **caractérisé par le fait que** l'actionnement des vérins intérieurs (63) permet d'obtenir les configurations exigées durant le fonctionnement en jet direct, et l'actionnement des vérins extérieurs (64) permet d'obtenir la configuration d'inversion de poussée.

3. Ensemble d'éjection selon l'une des revendications 1 ou 2, **caractérisé par le fait que** chaque paupière (16, 17) est retenue par deux vérins intérieurs (63) synchronisés disposés de part et d'autre du plan axial de symétrie de ladite paupière.

4. Ensemble d'éjection selon l'une quelconque des revendications 1 à 3, **caractérisé par le fait que** chaque paupière est retenue par deux vérins extérieurs (64) synchronisés, disposés de part et d'autre du plan axial de symétrie de ladite paupière.

5. Ensemble d'éjection selon l'une quelconque des revendications 1 à 4, **caractérisé par le fait que** les vérins extérieurs (64) ont une longueur sensiblement fixe durant le fonctionnement en jet direct.

6. Ensemble d'éjection selon l'une quelconque des revendications 1 à 5, **caractérisé par le fait que** le carénage (11) est globalement de révolution autour de l'axe (2) du conduit primaire (5).

7. Ensemble d'éjection selon l'une quelconque des revendications 1 à 6, dans lequel la tuyère primaire comporte une pluralité de volets chauds commandés alternant avec une pluralité de volets chauds suiveurs (4s) et la tuyère secondaire comporte une pluralité de volets froids commandés (8), alternant avec une pluralité de volets froids suiveurs (8s),
**caractérisé par le fait que** les moyens de commande des volets chauds et des volets froids comportent un anneau de commande (31) unique mobile axialement et disposé autour des volets froids (8), une pluralité de leviers (36) articulés dans leur zone médiane sur les volets froids commandés et dont une première extrémité est articulée sur l'anneau de commande, et une pluralité de biellettes (41) reliant les volets chauds commandés (4) aux deuxièmes extrémités des leviers (36).

## Patentansprüche

1. Gasstrahl-Ausstoßvorrichtung für ein Strahltriebwerk eines Überschallflugzeuge, wobei diese Vorrichtung:
- eine Hauptdüse mit mehreren Klappen mit variablem Querschnitt, die hinter einer Primärleitung (5) angeordnet ist und aus der in Betrieb ein Primärgasstrom (F1) entweicht,
- eine Nebendüse mit mehreren Klappen mit variablem Querschnitt, die hinter einer Nebenleitung (9) angeordnet ist, welche die Primärleitung umgibt und aus der in Betrieb ein Nebengasstrom (F2) entweicht, wobei sich diese Nebendüse nach hinten über die Ausstoßöffnung der Hauptdüse hinaus fortsetzt,
- eine Verkleidung (11), die die Nebenleitung (9) umgibt und hinter der Ausstoßöffnung (12) der Nebendüse eine Verengung (13) und dahinter einen divergierenden Teil (14) aufweist,
- eine Schubumkehrvorrichtung (15) mit zwei identischen Schalen (16, 17), die beiderseits einer axialen Symmetrieebene (P 1) schwenkbar an der Verkleidung (11) sitzen und entweder eine aktive Stellung oder Schubumkehrstellung einnehmen, bei der sie hinter der Verkleidung (11) quer in den Gasstrahl hineinragen, um diesen Strahl nach vorn umzuleiten, oder eine Ruhestellung oder Direktstrahl-Stellung einnehmen, bei der sie sich in der Verlängerung der Verkleidung (11) befinden,
- Mittel zur Steuerung der Klappen der Hauptdüse und der Nebendüse, sowie
- Mittel zur Steuerung der Schalen
umfasst,
**dadurch gekennzeichnet,**
**dass** die beiden Schalen (16, 17) an der Verkleidung jeweils über zwei seitliche Schwingarme (60) angebrecht sind, die gegenüber der Verkleidung frei um eine quer verlaufende Geometrieachse (61) schwenken können, welche sich nahe bei der axialen Symmetrieebene (P1) befindet, und dass sie jeweils durch mindestens einen Außenzylinder (64) festgehalten werden, der an der Verkleidung verankert ist und an einer Stelle (68) der entsprechenden Schale anliegt, die von der genannten axialen Symmetrieebene (P1) entfernt ist, und durch mindestens einen Innenzylinder (63) festgehalten werden, der an der Verkleidung (11) verankert ist und an einer Stelle (66) der entsprechenden Schale wirkt, die nahe an der genannten axialen Symmetrieebene (P1) liegt, und
dadurch, dass die Steuermittel der beiden Schalen (16, 17) von diesen Außenzylindern (64) und diesen Innenzylindern (63) gebildet werden.

2. Ausstoßvorrichtung nach Anspruch 1,
**dadurch gekennzeichnet,**
**dass** durch die Betätigung der Innenzylinder (63) die beim Direktstrahl-Betrieb erforderlichen Konfigurationen erzielt werden können, und durch die Betätigung der Außenzylinder (64) die Umkehrschub-Konfiguration erzielt werden kann.

3. Ausstoßvorrichtung nach einem der Ansprüche 1 oder 2,
**dadurch gekennzeichnet,**
**dass** jede Schale (16, 17) von zwei synchronisierten Innenzylindern (63) gehalten wird, die beiderseits der axialen Symmetrieachse dieser Schale angeordnet sind.

4. Ausstoßvorrichtung nach einem der Ansprüche 1 bis 3,
**dadurch gekennzeichnet,**
**dass** jede Schale (16, 17) von zwei synchronisierten Außenzylindern (64) gehalten wird, die beiderseits der axialen Symmetrieachse dieser Schale angeordnet sind.

5. Ausstoßvorrichtung nach einem der Ansprüche 1 bis 4,
**dadurch gekennzeichnet,**
**dass** die Außenzylinder (64) beim Direktstrahl-Betrieb eine im wesentlichen gleichbleibende Länge haben.

6. Ausstoßvorrichtung nach einem der Ansprüche 1 bis 5,
**dadurch gekennzeichnet,**
**dass** die Verkleidung (11) insgesamt um die Achse (2) der Primärleitung (5) umlaufend ausgeführt ist.

7. Ausstoßvorrichtung nach einem der Ansprüche 1 bis 6, bei der die Hauptdüse eine Vielzahl von gesteuerten Primärstrom-Klappen (4) enthält, die in Abwechslung mit einer Vielzahl von Nachfolge-Primärstrom-Klappen (4s) angeordnet sind, und die Nebendüse eine Vielzahl von gesteuerten Mantelstrom-Klappen (8) enthält, die in Abwechslung mit einer Vielzahl von Nachfolge-Mantelstrom-Klappen (8s) angeordnet sind,
**dadurch gekennzeichnet,**
**dass** die Steuermittel der Primärstrom-Klappen und der Mantelstrom-Klappen aus einem einzigen, axial bewegbaren Steuerring (31) bestehen, der um die Mantelstrom-Klappen (8) herum angeordnet ist, sowie aus einer Vielzahl von Hebeln (36), die mit ihrem mittleren Bereich an den gesteuerten Mantelstrom-Klappen angelenkt sind und deren erstes Ende an dem Steuerring angelenkt ist, sowie aus einer Vielzahl von Schwingarmen (41), die die gesteuerten Primärstrom-Klappen (4) mit den zweiten Enden der Hebel (36) verbinden.

## Claims

1. Gas jet ejection assembly for a jet-propulsion plant for a supersonic aircraft, the said assembly comprising:
a variable-section multiflap primary nozzle situated downstream of a primary duct (5) and from which a primary gas flow (F1) escapes during operation,
a variable-section multiflap secondary nozzle situated downstream of a secondary duct (9) surrounding the primary duct, and from which a secondary gas flow (F2) escapes during operation, the said secondary nozzle continuing rearwards beyond the outlet orifice of the primary nozzle,
a fairing (11) surrounding the secondary nozzle (9) and having, downstream of the outlet orifice (12) of the secondary nozzle, a shroud entry area (13) followed by a diverging part (14),
a thrust reverser device (15) comprising two identical eyelids (16, 17) pivoting on the fairing (11), on either side of an axial plane of symmetry (P1) and occupying either an active position or position of thrust reversal in which they project transversely into the gas jet downstream of the fairing (11) in order to deflect this jet forwards, or an inactive or direct-jet position in which they are in the continuation of the fairing (11),
drive means for the flaps of the primary nozzle and for the secondary nozzle, and
drive means for the eyelids,
**characterized in that**
the two eyelids (16, 17) are each mounted on the fairing via two lateral links (60) able to pivot freely relative to the fairing about a transverse axis (61) situated in the vicinity of the axial plane of symmetry (P1), and are each retained by at least one external actuator (64) anchored to the fairing (11) and bearing on a point (68) located on the corresponding eyelid and remote from the said axial plane of symmetry (P1), and by at least one internal actuator (63) anchored to the fairing (11) and acting on a point (66) located on the corresponding eyelid and closer to the said axial plane of symmetry (P1), and
**in that** the drive means of the two eyelids (16, 17) consist of the said external actuators (64) and internal actuators (63).

2. Ejection assembly according to Claim 1, **characterized in that** the internal actuators (63) can be actuated to obtain the configurations required during direct-jet operation, and the external actuators (64) can be actuated to obtain the thrust-revarsal configuration.

3. Ejection assembly according to either of Claims 1 and 2, **characterized in that** each eyelid (16, 17) is retained by two synchronized internal actuators (63) arranged on either side of the axial plane of symmetry of the said eyelid.

4. Ejection assembly according to any one of Claims 1 to 3, **characterized in that** each eyelid is retained by two synchronized external actuators (64) arranged on either side of the axial plane of symmetry of the said eyelid.

5. Ejection assembly according to any one of Claims 1 to 4, **characterized in that** the external actuators (64) are of a basically fixed length during direct-jet operation.

6. Ejection assembly according to any one of Claims 1 to 5 **characterized in that** the fairing (11) is basically axisymmetric about the axis (2) of the primary duct (5).

7. Ejection assembly according to any one of Claims 1 to 6, in which the primary nozzle comprises a plurality of hot driven flaps alternating with a plurality of hot follower flaps (4s) and the secondary nozzle comprises a plurality of cold driven flaps (8) alternating with a plurality of cold follower flaps (8s),
**characterized in that** the drive means of the hot flaps and cold flaps comprise a single axially mobile drive ring (31) arranged around the cold flaps (8), a plurality of levers (36) pivoting in their middle region on the cold driven flaps with a first end pivoting on the drive ring, and a plurality of links (41) connecting the hot driven flaps (4) to the second ends of the levers (36).
